# EUROPEAN PATENT APPLICATION

(11) **EP 1 588 789 A1**
(43) Date of publication of application: **26.10.2005**
(21) Application number: 05396014.2
(22) Date of filing: 14.04.2005
(51) Int. Cl.: B23B 31/14

(54) **A chuck for a workpiece**

(30) Priority: 14.04.2004 FI 20040530
(71) Applicant: Savolainen, Seppo, 30420 Forssa (FI); Tuominen, Marko, 21450 Tarvasjoki (FI)
(72) Inventor: Savolainen, Seppo, 30420 Forssa (FI); Tuominen, Marko, 21450 Tarvasjoki (FI)
(74) Representative: Nieminen, Taisto Tapani

(57) **Abstract**

A chuck for fixing a workpiece to a shaft (1) making rotary movement, like a shaft in a machine tool, whereby the chuck has fitted in a rotating piece (16), gripping jaws (17) moving in the in radial direction and a mechanism to move the jaws and to produce a clamping force directed on the piece by means of jaws (17). The chuck has two or more weights (10) rotating with the chuck, and fixed in weights(10) parts, like pegs (25, 26), which due to gravity the radial movement of weights (10) can be transferred to flange (13) or similar in the chuck transforming the radial motion into rotation that rotates with respect to weights (10), while the weights are moving in radial direction and there is also between said flange (13) and flange (16) containing jaws (17) an arrangement for transformation of the said flange motion into radial motion of haws (17) for fixing the piece.

## Description

The invention relates to a chuck for fixing a workpiece or a tool to a shaft making rotary movement, like a shaft in a machine tool, whereby the chuck has fitted in a rotating piece, as a flange, gripping jaws moving in the radial direction and a mechanism to move the jaws and to produce a clamping force directed by means of the jaws on the piece, whereby the chuck has also two or more weights rotating with the chuck.

Known in machine tools, as in lathes, is as a way of fixing a piece to be worked by clamping the piece by means of three or four jaws into the lathe chuck. The jaws in the lathe chuck are moved in radial direction, whereby the piece can be fixed by mean of them into the chuck clamping from the outside and a hollow piece can also be fixed with the jaws into the piece, where they are spread out to the outwards.

In most simple chucks the jaws are moved in radial direction by rotating the jaw-moving screw. Also known are chucks, where the jaws move mechanically by means of electricity, compressed air or hydraulics. Often also a very little movement is enough, when pieces of same size are repeatedly fixed into the chuck. Although in these cases the jaws need not be moved much, the however jaws must, be adjusted to a strain according to purpose and also released from it on removing the piece. These measures take time and, for instance, when fixing a piece of wood for turning the strain of jaw may exceed the tolerance of wood, since in straining the screw one cannot necessarily get any touch of the force of strain. In addition, the force of strain can vary among different pieces and cause form errors in a finished piece.

In order to improve the appeared disadvantages and problems a new chuck has been developed, by means of which automatic motion of jaws and strain into pieces is achieved. The chuck according to the invention is characterized in that there are parts fitted in the weights, as pegs, by means of which, due to gravity, the radial movement of the weights can be transferred to a flange in the chuck transforming the radial motion into rotation or similar that rotates with respect to the weights, while the weights are moving in radial direction and further, there is for fixing the piece between said flange and the flange containing jaws an arrangement for transforming the rotation said flange into radial motion.

The advantage of the chuck according to the invention is that the jaws automatically clamp the piece into it as result of its rotation, whereby all the pieces get the same strain. Fixing and correspondingly removal of pieces are quickly done. No force to make motion must be conveyed to the chuck, but all the motion needed is produced by rotation of the chuck.

In the following the invention is disclosed with reference to the enclosed drawing, where
- Fig. 1: presents a chuck according to the invention especially as an explosion figure.
- Fig. 2: presents the chuck from the side with the parts in order, but not fixed to each other.
- Fig. 3: presents pegs that transfer the motion of centrifugal weights.
- Fig. 4: presents a spring connected to the weighs.

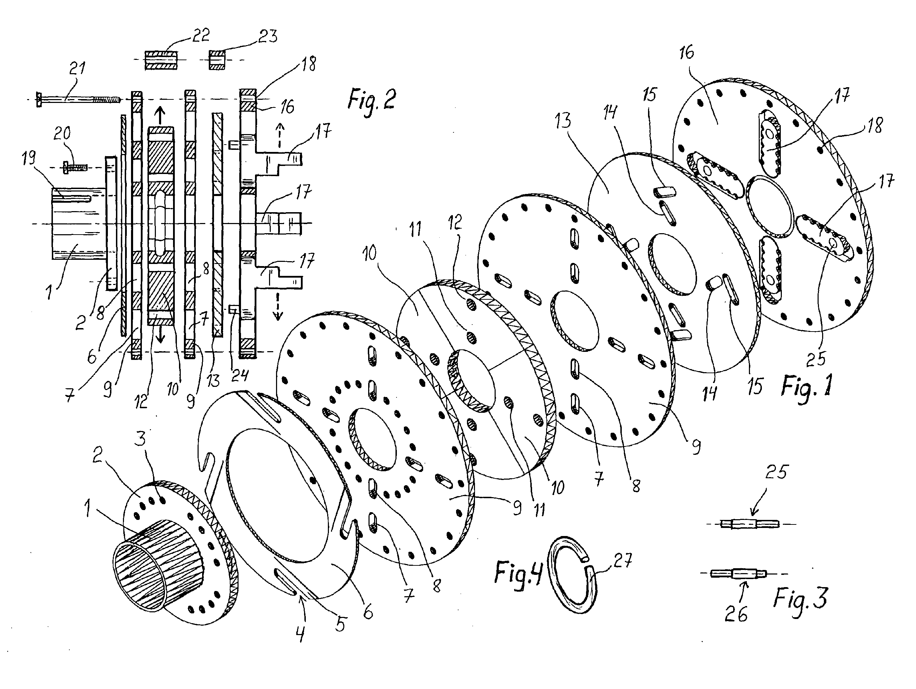

Figure 1 shows shaft 1 connected for instance to a machine tool and rotated by a motor and at end of which the a chuck according to the invention is fitted. There is in shaft 1 end a flange with holes 3 for fixing screws, by means of which the first bearing flange 9a of the chuck is connected to flange 2.After first bearing flange 9a comes a flange comprising centrifugal weights 10 and then follows the second bearing flange 9b. After bearing flange 9b comes flange 13 that transfers the radial motion into rotation and at last there is a flange 16 comprising movable jaws 17 clamped against the piece to be fixed.

There is also figure 2 to help clarify the chuck function. Work begins starting shaft 1 into chosen speed of rotation.. Then due to centrifugal force sector shaped weights 10 start moving outwards. Into holes in weights 10 pegs are placed so that into inmost holes 11 pegs 25 are placed and in outmost holes 12 pegs 26. Pegs 25 are supported in first bearing flange 9a and in second bearing flange 9b by oblong pegs 8. Peg 25 continues through the holes of second bearing flange 9b to flange 13 and to oblong diagonally directed holes 14 in it In the other direction peg 25 ends after having passed through hole 8 of bearing flange 9a. The flange of shaft 1 rotates bearing flange of 9a and bearing flange 9a rotates on its behalf the second bearing flange 9band at last flange 16, since these flanges are as to their outer periphery fixed by screw 21 to each other (figure 2).

Weights 10 rotate in step with said flanges, since pegs 25 placed in holes 11 of weights 10 transfer the rotation from flanges 9a, 9b to the weights. When pegs 25 of weights 10 reach to holes 14 of flange 13 the flange starts to rotate outward in regard to the flanges. Weights 10 can move outwards, while pegs 25 are able to move outwards in holes 8 of flanges 9a,9b. Slant holes 14 of flange 13 make flanges 13 rotate. When pegs 24 in jaw portions 17 of last flange 16 are on their behalf in slant holes 15 of flange 13 and flange 13 rotates in regard to flange 16 the jaws 17 move in radial direction. Thus jaws 17 move either outwards or inwards depending on in which direction the slant of holes 15 is in regard to holes 14. Holes 14 and 15 can be directed in many ways, depending on whether one wants the motion and force of weights as such to the jaws as opposite motion or the force strengthened or weakened by leverage.

The second peg 26 fixed to weights 10 reaches only to second bearing flange 9b, but in the other direction it runs through hole 7 of first bearing flange 9a in groove 4 of additional flange 6 that carries out locking of weights. Due to the slant groove the additional flange 6 rotates thus always, when weights 10 move in radial direction As the other edge of grooves 4 of additional flange 6 there are flexible tongues 5, which in normal position narrow groove 4. So in the groove peg 26 gets into engagement pressure, while the weights are moving outwards. When pegs 26 in grooves 4 cannot return the weights remain outside and the state of engagement pressure in jaws 17. When shaft 1 stops the locking of the clamping flange can be removed with a slight rotation of flange6 in the direction that opens the locking.

The chuck according to the figures is a chuck clamping the workpiece by means of jaws 17 from the outside. Thus on fitting the workpiece on the jaws it would be desirable that the jaws would already in some degree be clamping the piece, even if the chuck does not rotate yet. The solution for this is a spring 27 according to figure 4, which is installed in the groove of the inner circle of weights 10 to draw the weights outwards. Then also jaws 17 clamp a little inwards.

There are for jaws 17 many alternative solutions. If jaws that are straining outwards are wanted, there is a way to replace flange 13 with a such one where, for instance, the direction of the second hole is turned as mirror image There can also in flange 13 be ready made hole pairs oft in groups of four in different direction angles and among them the preferred one is chosen.

In the assembly weights 10 may not be between flanges 9a,9b. Therefore, according to figure 2 in connection with fixing screw 21 bushings 22 and 23 with their matching, length, are installed at flanges, for which, because of movement, a space with play is wanted.

According to the invention it is possible to fit as well instead of a workpiece a tool, for instance a drill rod between clamping and opening jaws.

## Claims

1. A chuck for fixing a workpiece or a tool to a shaft (1) making rotary movement, like a shaft in a machine tool, whereby the chuck has fitted in a rotating piece, as a flange (16), gripping jaws (17) moving in radial direction and a mechanism to move the jaws and to produce a clamping force directed on the piece by means of jaws (17), whereby the chuck also has two or more weights (10) rotating with the chuck, **characterized in that** there is fixed in weights (10) parts, like pegs (25, 26), whereby, due to gravity, the radial movement of weights (10) can be transferred to flange (13) or similar in the chuck transforming the radial motion into rotation that rotates with respect to weights (10), while the weights are moving in radial direction, and there is also between said flange (13) and flange (16) that contain jaws (17) an arrangement for transformation of the said flange motion into radial motion of the jaws for fixing the piece.

2. A chuck according to claim 1 **characterized in that** in the flange (13) transforming radial motion into rotation there are fitted for pegs (25) from weights (10) or similar oblong holes (14), the direction of which deviates from the radial.

3. A chuck according to claim 1 **characterized in that** the flange (16) containing weights (10) and jaws (17) is fitted to rotate with running shaft (1) without rotating in regard to shaft (1).

4. A chuck according to claim 1 **characterized in that** pegs (25) from weights (10) are fitted to move to oblong holes (14) of rotating flange (13) and said flange (13contains other oblong holes ((15) as to their direction deviating from the radial of the flange, with which pegs (24) fixed to jaws (17) or similar are co-operating.

5. A chuck according to claim 1 **characterized in that** the chuck has a mechanism for locking jaws (17) into engagement pressure, whereby the return of weights (10) from the farthest circle position is prevented by means of an additional rotating flange (6) in the oblong hole or groove (4) the free motion for instance of peg (26) of weight (10) is, prevented by means of spring element (5) drawing peg (26) against the edge of hole/groove (4).

6. A chuck according to claim 1 **characterized in that** by means of the arrangement of holes (14, 15) of rotating flange (13) the outward motion of weights (10) can be transferred into outward motion of jaws (17).

7. A chuck according to claim 1 **characterized in that** by means of the arrangement of holes (14, 15) of rotating flange (13) the outward motion of weights (10) can be transferred into inward motion of jaws (17).

8. A chuck according to claim 1 **characterized in that** with different hole directions of the arrangement of holes (14, 15) in rotating flange (13) it is possible to choose different ratios of transformation between centrifugal forces generated by weights (10) and forces active in jaws (17).

9. A chuck according to claim 1 **characterized in that** parts rotating together with the driving shaft, as flanges (9,16) are fixed to each other with a fixing means (21) placed on the outer circle.

10. A chuck according to claim 1 **characterized in that** the chuck has a free centre hole.
